# EUROPÄISCHE PATENTSCHRIFT

(11) **EP 0 943 976 B1**
(45) Veröffentlichungstag und Bekanntmachung des Hinweises auf die Patenterteilung: **04.10.2001**
(21) Anmeldenummer: 99112955.2
(22) Anmeldetag: 27.10.1995
(51) Int. Cl.: G05G 9/047, B66F 9/20, B66F 9/22

(54) **Handbetätigte Stellvorrichtung für einen Bedienungsstand bzw. -sitz**
Manually actuated control device for an operator stand or seat
Dispositif de commande manuelle pour poste de commande

(30) Priorität: 08.11.1994 DE 9417838 U; 17.02.1995 DE 29502639 U
(43) Veröffentlichungstag der Anmeldung: 22.09.1999
(62) Teilanmeldung aus: 95116918.4
(73) Patentinhaber: Jungheinrich Aktiengesellschaft, 22047 Hamburg (DE)
(72) Erfinder: Behncke, Christoph, 23795 Bad Segeberg (DE); Niebuhr, Michael, 22941 Bargteheide (DE); Schmid, Martin, 84076 Niederhornbach (DE)
(74) Vertreter: Patentanwälte Hauck, Graalfs, Wehnert, Döring, Siemons

(56) Entgegenhaltungen:
- WO-A-95/18995
- DE-A- 2 343 297
- FR-A- 2 312 070
- GB-A- 2 283 081
- US-A- 4 738 417
- US-A- 4 862 165
- US-A- 4 943 756
- US-A- 5 115 720

## Beschreibung

Die Erfindung bezieht sich auf eine handbetätigte Stellvorrichtung für einen Bedienungsstand bzw. -sitz, insbesondere für stationäre oder mobile Förderzeuge.

Der Fahrer von Förderzeugen hat nicht nur den Antrieb zu bedienen, sondern auch das Fördermittel, zum Beispiel ein an einem Mast geführtes Lasttragmittel (Hublader, Stapler usw.). Bei einem Schubmaststapler liegen weitere Funktionen vor. Das Hubgerüst ist verschiebbar und kann in seiner Neigung verändert werden. Zusätzlich kann das Lasttragmittel (Lastschlitten mit Traggabel) seitlich hin und her verfahren werden.

Aus "Jungheinrich-Schubmaststapler Retrak" ist bekanntgeworden, für die Funktionen "Heben und Senken", "Mastvorschub", "Mastneigung" und "Mastseitenschieber" getrennte Ventilhebel neben dem Fahrersitz anzubringen. Der Bedienungstand sieht ferner einen getrennten Fahrrichtungsschalter und eine Huptaste vor. Die Bedienungsperson muß daher eine erhebliche Konzentration aufbringen, den jeweils richtigen Schalthebel zu betätigen und keine ungewollte Betätigung vorzunehmen.

Aus EP 305 650 ist eine handbetätigte Stellvorrichtung für die Steuerventile einer hydraulischen Hubeinrichtung eines Förderzeugs, insbesondere eines Schubmaststaplers bekanntgeworden, die einen Schalthebel mit einer den Unterarm abstützenden Armlehne umfaßt. Armlehne und Schalthebel sind einteilig ausgebildet. Die Armlehne weist oberseitig eine dem Unterarm angepaßte ausgeformte Abstützfläche auf, die endseitig in den Schalthebel ausläuft. Eine derartige Lösung besitzt jedoch einige Nachteile.

Die Unterarmlänge hängt bekanntlich von der Körpergröße ab und kann um mehr als 100 mm differieren. Bei der bekannten Stellvorrichtung ist der Unterarm über die Hand mit dem Stellorgan fest verbunden. Auf den Körper des Fahrers wirken jedoch dynamische Kräfte ein, die teilweise über den Auflagepunkt des Oberarms (Ellbogen) abgeleitet werden. Dieser befindet sich in Abhängigkeit von der Unterarmlänge auf verschiedenen Punkten der Abstützung. Dieser Punkt bewegt sich auf dem Stellorgan aus Gründen der Abhängigkeit von der Körpergröße um bis zu 100 mm. Eine wirkungsvolle Abstützung erfolgt nur dann, wenn der Auflagepunkt in Höhe der Lagerung erfolgt, die eine Verschiebung des Stellorgans sowie eine Verschwenkung ermöglicht. Dieser Fall tritt aber nur bei einer bestimmten Unterarmlänge ein. In allen anderen Fällen wird über die Ableitung der dynamischen Kräfte über den Auflagepunkt ein unerwünschtes Moment am Stellorgan erzeugt. Dies führt zu einer ungewollten Stellbewegung. Mithin kann die Armauflage nur bedingt zur Abstützung benutzt werden. Ein großer Teil des Einsatzes bei derartigen Förderzeugen ist ein reines Fahren. Ein entspanntes Abstützen auf der Armauflage ist daher kaum möglich.

Für die Ansteuerung von drei oder mehr Kanälen ist ferner bekanntgeworden, einen zylindrischen Umfassungsgriff vorzusehen, der ggf. an die Handform angepaßt ist (Joystick). Die genaue Fixierung der Hand am Hebel führt zu einer belastenden statischen Haltung, die eine Verkrampfung der Handmuskulatur verursachen kann. Da der Griff mindestens so lang ist wie die Handbreite des 95. Percentilmannes steht er sehr weit vor. Dadurch ist die Gefahr einer ungewollten Betätigung durch zum Beispiel Hängenbleiben mit dem Ärmel sehr groß. Kleine Hände müssen bei daumenbetätigten Bedienelementen den Unterarm anheben. Dies führt zur Ermüdung.

Aus der DE 42 06 515 ist bekanntgeworden, das Stellorgan als ein zwischen Handballen und Finger sich erstreckendes von Hand übergreifbares bzw. zwischen Finger und Daumen von oben erfaßbares schildförmiges Griffelement auszubilden, wobei es bei auf der Auflage aufliegendem Unterarm von der Hand bequem übergriffen werden kann und wobei eine Führung das Griffelement annähernd in einer Ebene führt derart, daß es im wesentlichen aus den Fingergelenken und/ oder aus dem Handgelenk heraus betätigbar ist. Das Griffelement wird in einer Führungsebene annähernd parallel zu einer ebenen Auflagefläche geführt. Die Bewegung des Griffelements wird vornehmlich durch Finger- bzw. Handgelenkdrehung ausgeführt (Feinsteuerung). Mit einem derartigen Griffelement lassen sich vier analoge Kanäle steuern, wobei an dem Griffelement noch eine oder mehrere Schalttasten für die Betätigung weiterer Funktionen angeordnet sein können.

Die Steuerung von vier Kanälen, wie sie mit dem bekannten Griffelement ermöglicht wird, ist für Förderzeuge mit mehr Funktionen, wie zum Beispiel bei einem Schubmaststapler, nicht ausreichend. Daher sind dann zwei oder mehr derartige Griffelemente nebeneinander anzuordnen, d.h. es sind nicht mehr alle Funktionen zu steuern.

Der Erfindung liegt die Aufgabe zugrunde, eine Stellvorrichtung für einen Bedienungsstand bzw. -sitz, insbesondere für stationäre oder mobile Förderzeuge zu schaffen, bei dem in einem einzigen Stellorgan eine größere Anzahl von Schaltkanälen gesteuert werden kann und das zugleich ergonomisch optimal ausgebildet ist, um der Bedienungsperson eine ermüdungsfreie Betätigung zu ermöglichen und bei Nichtbedienung eine entspannte Ruheposition, aus der Fehlbedienungen nicht möglich sind.

Diese Aufgabe wird durch die Merkmale des Anspruchs 1 gelöst.

Bei der erfindungsgemäßen Stellvorrichtung wird ebenfalls ein joystickähnliches Stellorgan vorgesehen, über das alle in Frage kommenden Funktionen angesteuert werden. Im Gegensatz zum üblichen Joystick wird jedoch die Handhabe des Stellorgans von oben erfaßt. Diese ist an die Handform angepaßt, ohne daß es eine eindeutige Griffhaltung gibt. Vielmehr ist der Griffbereich so geformt, daß vielfältige Griffmöglichkeiten und -haltungen angeboten werden. So ist eine erste Griffhaltung zweckmäßig, um das Stellorgan in einer ersten Betätigungsebene zu bewegen. Das Stellorgan kann nach einer Ausgestaltung der Erfindung als Kreuzschalter wirken und nach einer weiteren Ausgestaltung der Erfindung einen Zweiachsenkreuzhebel betätigen. Weitere Funktionen werden über einen Schaltknopf gesteuert, der auf der der Bedienungsperson zugewandten seitlichen Fläche der Handhabe so angeordnet und ausgeformt ist, daß er vom Daumen betätigbar ist, während die Hand sich auf der Handhabe abstützt. Bei der Daumenbetätigung des Schaltknopfes kann eine andere Griffhaltung eingenommen werden. Eine dritte Griffhaltung wird zum Beispiel in der Ruhelage eingenommen; der Ellbogen kann sich bei allen Griffhaltungen auf einer vorzugsweise gepolsterten Unterlage abstützen, die neben dem Fahrersitz in anatomisch angepaßter Höhe angeordnet ist.

Der Einfluß verschiedener Handgrößen wird minimiert, da es kein "Kammermaß" zwischen Handauflage und daumenbetätigten Bedienelementen wie bei "klassischen" Joysticks gibt.

Der Schaltknopf ist in einer zweiten Betätigungsebene bewegbar, die quer zur ersten Betätigungsebene liegt, vorzugsweise senkrecht dazu verläuft. Der Schaltknopf kann nach einer Ausgestaltung der Erfindung eine H-Kulisse betätigen. Auf diese Weise kann mit dem erfindungsgemäßen Stellorgan eine Steuerung von insgesamt acht Kanälen erfolgen, d.h. von vier Funktionen für beide Vorzeichen.

Die erfindungsgemäße Handhabe und auch der Schaltknopf haben eine Größe und Ausformung, daß eine Bedienung mit Handschuhen fehlerfrei möglich ist. Werden zum Beispiel Förderzeuge in einem Kühlhaus gefahren oder in einer anderweitigen Umgebung, sind die Fahrer normalerweise gezwungen, Handschuhe zu tragen. Im übrigen kann in der Handhabe eine Heizung integriert werden. Es ist zweckmäßig, eine Betätigungsrichtung des Stellorgans mit der Richtung zusammenfallen zu lassen, die durch den Unterarm des Bedieners vorgegeben ist. Dementsprechend liegt die andere Betätigungsrichtung annähernd senkrecht dazu. Gleichwohl ist es zweckmäßig, die Handhabe insgesamt in einem Winkel zu dieser Richtung anzuordnen dergestalt, daß das hintere Ende der Handhabe von der Bedienungsperson weiter entfernt liegt als das vordere Ende, so daß insbesondere beim Betätigen in Querrichtung keine zu starke Verdrehung des Handgelenks nach außen auftritt. Der Versatz der Handhabe nach rechts - vom Fahrer aus gesehen-erleichtert diese ergonomisch problematische Betätigungsrichtung. Nach einer weiteren Ausgestaltung der Erfindung weist die Handhabe auf der Seite des Schaltknopfes und auf der gegenüberliegenden Seite annähernd plane Seitenflächen auf, die mit einer Rundung in eine im Querschnitt bogenförmig gerundete Vorder- bzw. Hinterfläche übergehen. Vorder- und Hinterfläche divergieren nach einer Ausgestaltung der Erfindung nach oben; auch die Seitenflächen können geringfügig nach oben konvergieren, so daß der Körper der Handhabe sich von unten nach oben allmählich und stetig vergrößert. An der Oberseite kann die Handhabe eine Wölbung aufweisen, die in der Hauptrichtung der Handhabe verläuft und zu den Seitenflächen gerundet übergeht. Die Wölbung nimmt vorzugsweise zum hinteren Ende etwas ab. Schließlich weist die Handhabe nach einer Ausgestaltung der Erfindung am hinteren Ende einen ballenförmigen vorspringenden Griffabschnitt auf, der im spitzen Winkel zu den Seitenflächen von der Bedienungsperson fortgerichtet ist, wobei zwischen diesem Griffabschnitt und der Oberseite der Handhabe eine mehr oder weniger ausgeprägte Furche verläuft. Der vorspringende Griffabschnitt ist insbesondere an den Ballen der Hand angeformt und ermöglicht die Querbetätigung des Stellorgans durch Druck des Ballens bzw. Zug der Finger am Stellorgan.

Die Handhabe ist allseitig gerundet und glatt, um einen fließenden Wechsel zwischen Umfassungsgriff und Zug-/ Druckbetätigung zu ermöglichen.

Der daumenbetätigte Schaltknopf befindet sich vorzugsweise in der Nähe der Drehachse bzw. zeigt in Richtung derselben, um Einflüsse aus der Daumenbetätigung auf die Hauptachse zu minimieren. Nach einer Ausgestaltung der Erfindung weist der daumenbetätigte Schaltknopf einen gegenüber einem Basisabschnitt erhabenen Rücken auf, der sich zu beiden Seiten konkave dachförmige Flächen anschließen, wobei Rücken und Dachflächen annähernd in Daumenrichtung verlaufen, wenn die Hand die Handhabe in einer Griffhaltung erfaßt, in der der Daumen den Knopf betätigt. Der Knopf kann mithin in der Betätigungsebene in Richtung des Rückens und somit in Daumenrichtung verschoben werden bzw. senkrecht dazu durch Verschwenken des Daumens, indem dieser an die untere oder obere Dachfläche angreift. Der Rücken des Schaltknopfes ist nach einer weiteren Ausgestaltung der Erfindung zweckmäßigerweise mittig mit einer Einbuchtung versehen, um ein leichteres Erfassen zum Schieben des Schaltknopfes in Daumenrichtung und entgegengesetzt dazu zu ermöglichen. Im übrigen ist auch der Schaltknopf allseitig gerundet, um ein Hängenbleiben mit dem Daumen und damit eine ungewollte Betätigung zu vermeiden.

An der erfindungsgemäßen Handhabe können weitere Schalter angebracht sein. So kann vorzugsweise unterhalb des Schaltknopfes ein Druckschalter für eine Hupe vorgesehen werden. Ferner kann an der Oberseite der Handhabe am vorderen Ende eine Schaltwippe so angeordnet werden, daß sie vom Finger betätigbar ist, wobei die Schwenkachse der Schaltwippe in einer Ebene liegt, die zwischen den Seitenflächen der Handhabe verläuft.

Das erfindungsgemäße Stellorgan ist insbesondere für einen Schubmaststapler geeignet, bei dem der Mast bzw. die Gabel in seiner Neigung verstellbar und auch der Lastschlitten eine Seitenverschiebemöglichkeit aufweist. In diesem Fall steuert nach einer Ausgestaltung der Erfindung das Stellorgan das Heben und Senken des Lasttragmittels sowie den Mastschub. Der Schaltknopf steuert hingegen die Fahrtrichtung und den Seitenschub des Lasttragmittels. Ist eine Schaltwippe vorgesehen, kann mit dieser die Mastneigung gesteuert werden. Wesentlich ist auch eine sinnfällige Betätigungsrichtung des Stellorgans, d.h. sie fällt mit der Richtung des gestellten Bauteils zusammen (z.B. Mastneigung rückwärts). Die Schaltwippe wird dabei in die gleiche Richtung zurückgeneigt.

Im Falle der beschriebenen Zuordnung ist es zweckmäßig, wenn das Stellorgan analog proportional steuert und der Schaltknopf den Seitenschub tastend digital und die Fahrtrichtung rastend digital. Bei einer Schaltwippe wird die Mastneigung wiederum vorzugsweise analog proportional gesteuert.

Die Erfindung wird nachfolgend anhand von Zeichnungen näher erläutert.
- Fig. 1: zeigt perspektivisch die Darstellung eines Flurförderzeugs mit einer Stellvorrichtung nach der Erfindung.
- Fig. 2: zeigt perspektivisch die Handhabe für ein Stellorgan nach Fig. 1.
- Fig. 3: zeigt einen Schaltplan mit elektrischen und hydraulischen Komponenten für die Ansteuerung von Kraftgeräten mit dem Stellorgan nach Fig. 2.
- Fig. 4: zeigt einen abgewandelten Schaltplan mit elektrischen und hydraulischen Komponenten für die Ansteuerung von Kraftgeräten mit dem Stellorgan nach Fig. 2.
- Fig. 5: zeigt perspektivisch die Ansicht eines etwas abgewandelten Stellorgans von der Bedienungsseite aus gesehen.
- Fig. 6: zeigt die Draufsicht auf das Stellorgan nach Fig. 5.

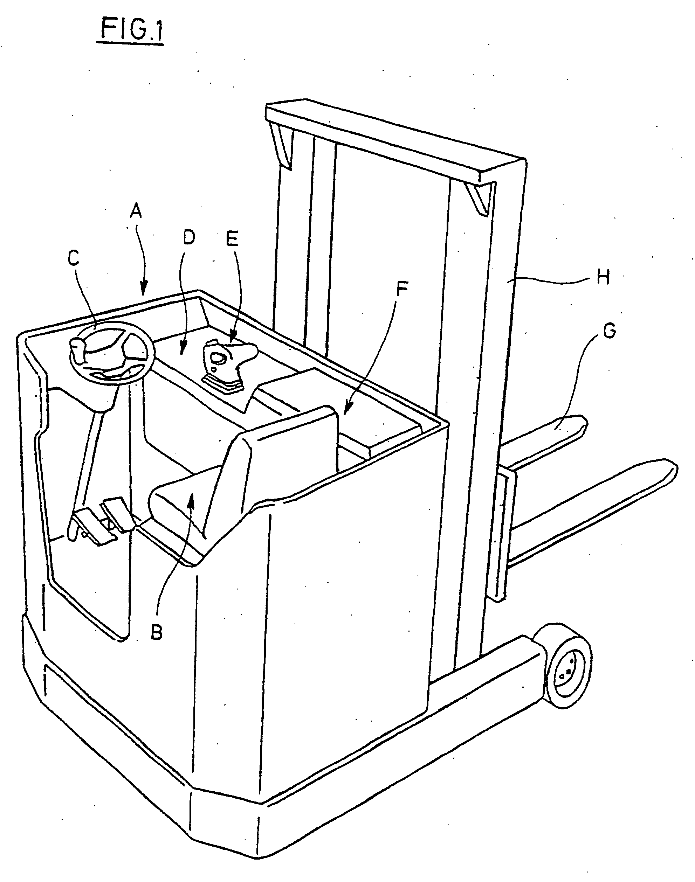

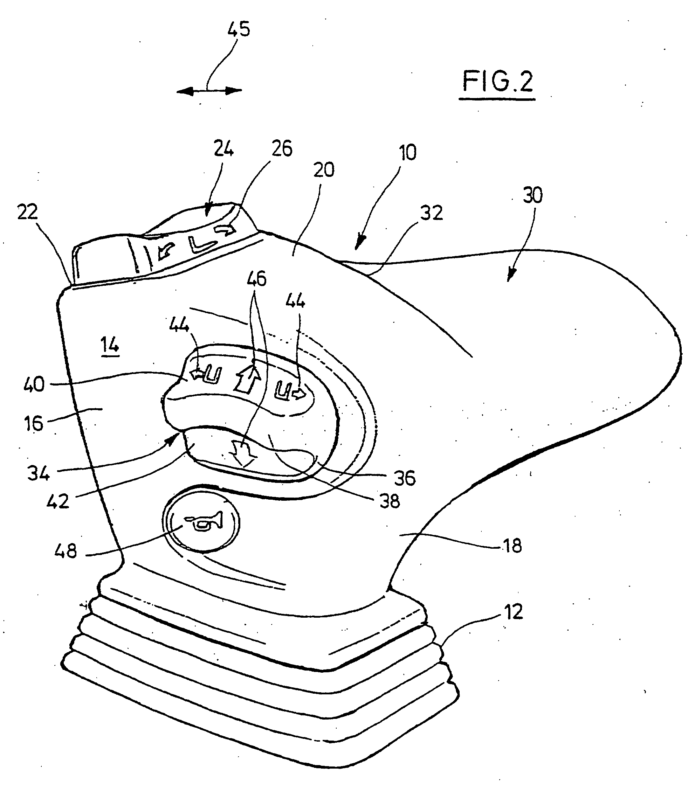

Fig. 1 zeigt ein herkömmliches Förderzeug A mit einem Fahrersitz B quer zur Fahrtrichtung. Die Steuerung erfolgt durch ein Steuerrad C. Rechts vom Fahrersitz befindet sich ein Bedienpult D mit einem Stellorgan E, das in Fig. 2 näher dargestellt ist. Man erkennt, daß hinter dem Stellorgan E eine Armauflage F mit 'einer entsprechenden Polsterung vorgesehen ist, die etwas höher liegt als das Pult D. Der Unterarm kann daher bei Betätigung des Stellorgans E bequem auf der gepolsterten Unterlage F aufliegen.

Das Förderzeug A weist einen Mast H auf, der in seiner Neigung verstellbar ist. Am Mast H ist ein Lasttragmittel G höhenverstellbar geführt, das zu den Seiten verschiebbar ist.

Die in Fig. 2 dargestellte allgemein mit 10 bezeichnete Handhabe entspricht dem Stellorgan E nach Fig. 1 und ist zum Beispiel für einen Schubmaststapler (Fig. 1) gedacht. Es ist mit einem entsprechenden nicht gezeigten Schaltgestänge verbunden, dessen Funktion aus den nachstehenden Erläuterungen deutlich wird. Die Handhabe 10 bzw. das zugeordnete Stellorgan befindet sich, wie erwähnt, neben dem Fahrersitz in einer Höhe und einer Position, daß der Fahrer die Handhabe leicht von oben erfassen kann, wobei sein Ellbogen sich auf der gepolsterten Auflage F hinter der Handhabe 10 abstützt. Zwischen der Handhabe 10 und der Verkleidung des Bedienungsstandes ist ein Faltenbalg 12 vorgesehen, der ein Eindringen von Feuchtigkeit und Schmutz verhindern soll. Die Längsachse des Faltenbalges läuft parallel zur Blickrichtung des Fahrers.

Die Handhabe 10 weist eine dem Fahrer zugekehrte erste Seitenfläche 14 auf, die zumindest im mittleren Bereich annähernd plan geformt ist. Auf der gegenüberliegenden Seite ist ebenfalls eine annähernd plane Seitenfläche vorgesehen. Die Seitenflächen gehen in eine Vorderfläche 16 und eine hintere Fläche 18 über eine entsprechende Rundung über. Die Flächen 16, 18 sind ihrerseits im Querschnitt gerundet. Sie erstrecken sich nach oben divergierend, so daß die Handhabe 10 sich von unten nach oben leicht vergrößert. Die Oberseite 20 der Handhabe 10 ist mit einer Wölbung versehen, die über entsprechende Rundungen in die Seitenflächen 14 übergeht und deren Höhe nach hinten leicht abnimmt. Die Wölbung 10 der Oberseite verläuft in etwa der gleichen Richtung wie der Grundkörper der Handhabe 10. Im Querschnitt ist der Grundkörper der Handhabe in der Längsachse deutlich größer als in der Querachse. Im vorderen Bereich weist die Oberseite eine nach vorn geneigte Abschrägung 22 auf, in der eine Schaltwippe 24 schwenkbar gelagert ist, wie durch die beiden Pfeile 26 angedeutet. Die Schwenkachse der mit einer konkaven Oberseite ausgebildeten Schaltwippe 24 liegt in einer Ebene, die zwischen den Seitenflächen 14 verläuft.

Wie bezüglich des Faltenbalgs 12 erkennbar, verläuft der Grundkörper der Handhabe 10 nicht in Achsrichtung des Balgs 12, sondern leicht schräg, wobei das hintere Ende weiter vom Fahrer entfernt liegt als das vordere. Am hinteren Ende ist aus dem Grundkörper heraus geformt ein ballenförmiger vorspringender Griffabschnitt 30 vorgesehen, der an der Unterseite allmählich in die Seitenfläche 18 übergeht und mit der Oberseite eine Furche 32 bildet. Insgesamt ist der Grundkörper mit dem leicht schräg nach hinten vorspringenden Griffabschnitt 30 so geformt, daß die Handhabe 10 in unterschiedlichen Griffpositionen von oben mit der ganzen Hand erfaßt werden kann.

Die Handhabe bzw. ihre Oberfläche ist allseitig gerundet und glatt, um einen fließenden Wechsel zwischen Umfassungsgriff und Zug- und Druckbetätigung zu ermöglichen. Sie betätigt zum Beispiel einen Zweiachsenkreuzhebel mit den bereits beschriebenen Richtungen, wobei der Druck nach vorn und zur Seite und der Zug nach hinten und zum Fahrer hin erfolgt. Der beschriebene leichte Winkel des Grundkörpers der Handhabe 10 ist so gewählt, daß eine entspannte Grundposition eingenommen wird und besonders beim Betätigen vom Fahrer fort keine zu starke Verdrehung des Handgelenks nach außen auftritt. Der Versatz des Griffabschnitts 30 vom Fahrer aus gesehen nach rechts erleichtert diese ergonomisch problematische Betätigungsrichtung ebenfalls.

Durch die Handhabe 10 wird eine erste Betätigungsebene (Pfeil 45) vorgegeben, die in der Horizontalen liegt. Eine zweite Betätigungsebene wird durch einen Schaltknopf 34 definiert, wobei letztere annähernd senkrecht zur ersteren verläuft. Der Schaltknopf weist einen annähernd ovalen Basisabschnitt 36 auf, wobei die längere Achse annähernd parallel zur Blickrichtung des Fahrers verläuft. Entlang dieser längeren oder Hauptachse ist ein erhabener Rücken 38 am Schaltknopf 34 geformt, der mittig eine Einbuchtung aufweist. Beidseitig des Rückens erstrecken sich konkave Dachabschnitte 40, 42, die gerundet in den Basisabschnitt 36 übergehen. Der Rücken 38 geht ebenfalls gerundet in den Basisabschnitt 36 über. Wie durch die ersten Pfeile 44 angedeutet, ist der Schaltknopf 34 in einer ersten Richtung verschiebbar, wobei diese Richtung übereinstimmt mit der ersten Verstellrichtung der Handhabe 10. Der Schaltknopf 34 läßt sich ferner in einer Richtung senkrecht dazu verschieben, wie durch die Pfeile 46 angedeutet. Der Schaltknopf 34 ist so angeordnet und ausgeformt, daß er mit dem Daumen der Hand betätigt werden kann, die die Handhabe 10 von oben erfaßt. Insgesamt ist die Handhabe 10 so ausgeformt, daß sie von oben von Hand erfaßt werden kann, und zwar in einem Umfassungsgriff oder auch nur teilweise, je nach der gewünschten Betägigung. Die Schaltwippe 24 kann durch Zeigefingerbetätigung bewegt werden. Bei dieser Betätigung kann die Hand mehr oder weniger locker auf der Handhabe 10 aufliegen, wobei der Ballen zwischen der Oberseite 20 und dem vorspringenden Griffabschnitt 30 abgestützt ist.

Unterhalb des Schaltknopfes 34 befindet sich ein Druckknopf 48 zur Betätigung einer Hupe.

Schaltknopf 34 und Schaltwippe 24 sowie Drucktaste 48 sind annähernd in der Nähe der Drehachse angeordnet bzw. zeigen in Richtung derselben, um Einflüsse aus der Finger- und Daumenbetätigung auf die Hauptachse zu minimieren.

Wie erwähnt, kann das mit der Handhabe 10 betätigte Stellorgan für den Einsatz in einem Schubmaststapler vorgesehen werden. Die Betätigung der Handhabe als Zwei-Achsen-Kreuzhebel nach vorn und nach hinten parallel zur Blickrichtung des Fahrers bedeutet ein Senken bzw. Heben des Lasttragmittels G. Eine Betätigung der Handhabe 10 vom Fahrer seitlich fort bedeutet das Vorschieben und das Ziehen der Handhabe 10 von der Seite zum Fahrer hin das Zurückschieben des Mastes des Schubmaststaplers. Diese beiden Funktionen werden tastend, analog, proportional der gestellten Bewegungsgeschwindigkeit ausgeführt. Das gleiche gilt für die Betätigung der Schaltwippe 24. Der Daumen steuert den Schaltknopf nach vorn und nach hinten bzw. nach oben und nach unten. In den ersten beiden Richtungen wird der Seitenschub des Lasttragmittels gesteuert, während in den beiden anderen Richtungen die Antriebsrichtung vorgegeben wird. Im letzteren Fall erfolgt die Steuerung rastend digital ohne Nullstellung. Im ersteren Fall erfolgt die Steuerung tastend digital. Die Drucktaste 48 wird ebenfalls über das Vorstrecken des Daumens betätigt, indem der Umfassungsgriff an der Handhabe 10 gelöst wird.

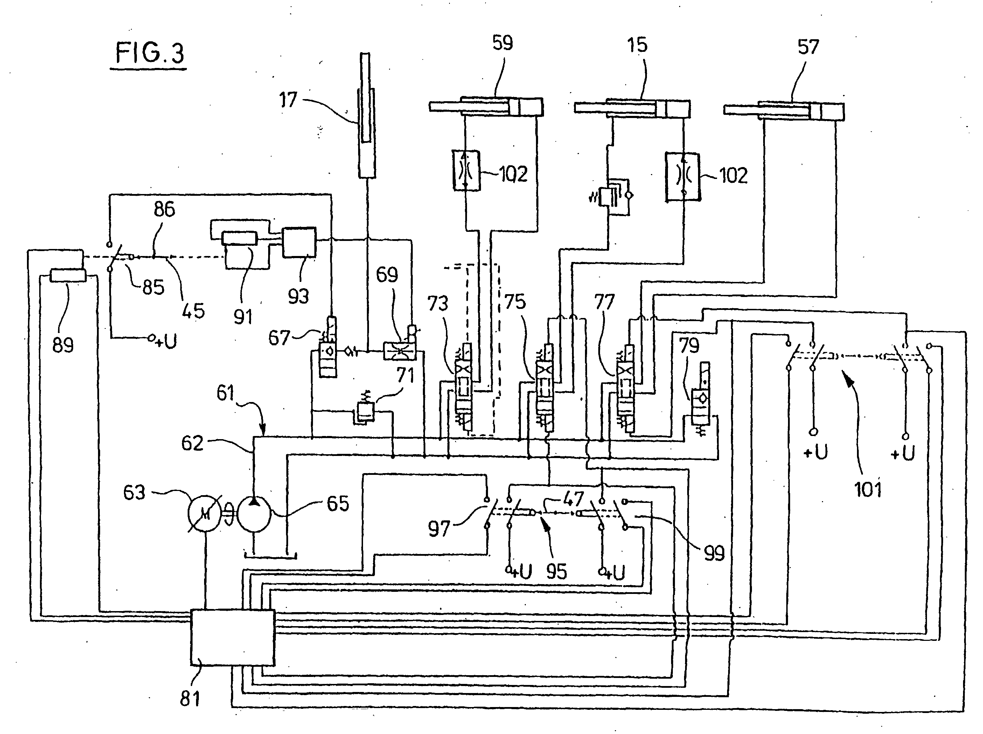

Der Schaltplan der Fig. 3 zeigt die elektrischen und hydraulischen Komponenten, welche die Steuerverbindung zwischen der Handhabe 10 und den die Arbeitsbewegungen des Lasttragmittel G bewirkenden Antriebsmitteln bilden. Im oberen Teilbereich dieser Zeichnung sind die hydraulischen Kraftgeräte angedeutet, die auf das Lasttragmittel G einwirken. Dabei dienen die Hydraulik-Zylindereinheit 17 der Höhenverstellung des Lasttragmittels G und die Hydraulik-Zylindereinheit 15 dem Kippen des Hubmastes H. Eine weitere Hydraulik-Zylindereinheit 57 kann der Seitenverstellung des Lasttragmittels G dienen, eine Hydraulik-Zylindereinheit 59 beispielsweise dem Drehen bzw. Schieben des Lasttragmittels G relativ zum Halbmast H. Sämtliche Kraftgeräte 15, 17, 57, 59 sind Teil eines Hydraulik-Kreislaufs 61, welcher ferner eine von einem Motor 63, insbesondere einem Elektromotor, veränderlicher Drehzahl angetriebene Hydraulik-Pumpe 65 enthält. Mit der Hydraulik-Druckleitung 62 dieses Hydraulik-Kreislaufs 61 ist die Zylindereinheit 17 über ein elektromagnetisch betätigbares, in Sperrstellung vorgespanntes 2/2-Wegeventil 67 verbindbar. Zum Heben des Lasttragmittels G wird dieses Ventil 67 geöffnet. In Reihe zu dem Ventil 67 ist eine als Proportional-Magnetventil ausgeführte, elektromagnetisch betätigbare Drossel 69 angeordnet, welche zum Senken des Lasttragmittels 13 geöffnet wird. Ein Überdruckventil 71 überbrückt die Zylindereinheit 17 mit den beiden Ventilen 67 und 69. Die übrigen Hydraulik-Zylindereinheiten 59, 15, 57 sind jeweils über ein federzentriertes, elektromagnetisch betätigbares 4/3-Wegeventil 73, 75 bzw. 77 mit der Hydraulik-Druckleitung 62 des Hydraulik-Kreislaufs 61 verbindbar. Mittels eines weiteren elektromagnetisch.betätigbaren 2/2-Wegeventils 79 kann ein druckloser Umlauf ermöglicht werden. Dieser ist für die Verwendung bestimmter Pumpentypen erforderlich, z.B. einer Außenzahnradpumpe.

Die Drehzahl des Elektromotors 63 wird durch eine Motor-Steuereinheit 81 gesteuert. Die Motorsteuerung 81 ist bevorzugt als auf dem Prinzip der Pulsweitenmodulation basierende Impulsteuerung ausgebildet.

Das in Pfeilrichtung 45 verstellbare Stellorgan 10 kann wahlweise mit einer Analog/Proportional-Steuerung versehen werden durch mechanische Kopplung mit einem Taster 85. Zum Heben des Lasttragmittels G wird das Stellorgan 10 aus einer Neutralstellung (mit 86 angedeutet) nun so nach links in Fig. 3 verschwenkt, daß der Taster 85 geschlossen wird. Beim Schließen des Tasters 85 wird an das Magnetventil 67 ein Steuersignal angelegt, das zum Öffnen des Magnetventils 67 führt. Außerdem muß (wenn vorhanden) das Ventil 79 nach dem Öffnen des Ventils 67 geschlossen werden. Vorteilhafterweise wird auf das Ventil 79 verzichtet, da es beim Schließen des Ventils zu einem Geschwindigkeitssprung kommt. Hierdurch wird die Hydraulik-Zylindereinheit 17 mit der Hydraulik-Druckleitung 62 verbunden und mit Hydraulikflüssigkeit beschickt. Das Lasttragmittel G wird daraufhin angehoben. Zusätzlich zum Taster 85 kann das Stellorgan 10 mit Analogwertgeber, z.B. einem Potentiometer 89, mechanisch gekuppelt werden, dessen Abgriffsposition bei Verschwenken des Stellorgans 10 nach links in Fig. 3 gemäß Pfeilrichtung 45 kontinuierlich verstellt wird. Das Potentiometer 89 ist an die Motor-Steuereinheit 81 angeschlossen und liefert ein zum Verstellweg des Stellorgans 10 proportionales Steuersignal an die Steuereinheit 81. Letztere steuert abhängig von der Amplitude dieses Steuersignals die Drehzahl des Motors 63 derart, daß mit zunehmendem Weg des Stellorgans die Motordrehzahl stufenlos steigt und die gestiegene Motordrehzahl führt zu einem erhöhten Durchsatz der Hydraulik-Pumpe 65 und damit zu einer entsprechenden höheren Hebegeschwindigkeit des Lasttragmittels G.

Zum Senken des Lasttragmittels G genügt aufgrund von dessen Eigengewicht allein die Öffnung des Mengenreglers 69. Hierzu ist das Stellorgan 10 mechanisch mit einem weiteren Analogwertgeber, z.B. Potentiometer 91, mechanisch gekuppelt, dessen Abgriffposition bei Verschwenken nach rechts in Fig. 3 gemäß Pfeilrichtung 45 kontinuierlich verstellt wird. Das so erzeugte analoge Steuersignal wird in der Steuerung 81 verarbeitet und dem als Proportional-Magnetventil ausgeführten Mengenregler 69 zugeführt. Die Öffnungsstellung der Drossel 69 ist proportional zur Amplitude des zugeführten Steuersignals, so daß eine zunehmende Verschwenkung des Stellorgans eine höhere Senkgeschwindigkeit des Lasttragmittels bewirkt.

In einer Ausführungsform ist zum Vor- und Zurückkippen des Hubmastes 9 die Schaltwippe 24 kippbar und mit einer Tasteranordnung 95 gekuppelt. Diese Tasteranordnung 95 ist von zwei Zweistufentastern 97 und 99 gebildet, welche jeweils durch Kippen der Wippe 24 in einer der beiden Richtungen betätigbar sind. Beide Zweistufentaster 97, 99 sind so gestaltet, daß nach Zurücklegen eines ersten Teilkippwegs jeweils die erste Stufe der Zweistufentaster 97, 99 schließt, wodurch das Magnetventil 75 - je nach Verstellrichtung des Stellorgans 10 - in eine seiner beiden Öffnungsstellungen eingestellt wird und gleichzeitig der Motor-Steuereinheit 81 ein einer ersten Motordrehzahl entsprechendes Steuersignal zugeführt wird. Nach Zurücklegen eines zweiten Teilkippwegs schließt auch jeweils die zweite Stufe der Zweistufentaster 97, 99, was zwar keine Änderung des Öffnungszustands des Ventils 75 bewirkt, jedoch ein Steuersignal an die Motor-Steuereinheit 81 hervorruft, das zu einer sprunghaften Erhöhung der Motordrehzahl führt. Auf diese Weise kann der Hubmast H sowohl nach vorne, als auch zurück in zwei Geschwindigkeiten gekippt werden.

Eine weitere, der Tasteranordnung 95 ähnliche Tasteranordnung 101 ist mit dem Ventil 77 und der Motor-Steueteinheit 81 verbunden. Sie dient der Verstellung der Hydraulik-Zylindereinheit 57 zum Vor- und Zurückschieben des Mastes H. Sie ist durch Verstellung des Stellorgans 10 senkrecht zu Pfeil 45 betätigbar. Auch das Ventil 73 und die Hydraulik-Zylindereinheit 59 können mittels eines derartigen bidirektionalen Zweistufentasters gesteuert werden. Dies ist jedoch nur zum Teil und gestrichelt angedeutet.

Zusätzlich sind in der hydraulischen Anlage nach Fig. 3 zwei Richtungsstromregler 102 vorgesehen. Diese begrenzen die maximale Geschwindigkeit des jeweiligen Verbrauchers. Durch diese Anordnung ist eine Mehrfachbedienung von hydraulischen Verbrauchern auch bei großen Druckunterschieden möglich, da sichergestellt ist, daß sich keine sicherheitskritischen Zustände einstellen können, zum Beispiel durch eine extrem hohe Schubgeschwindigkeit bei angehobener Last.

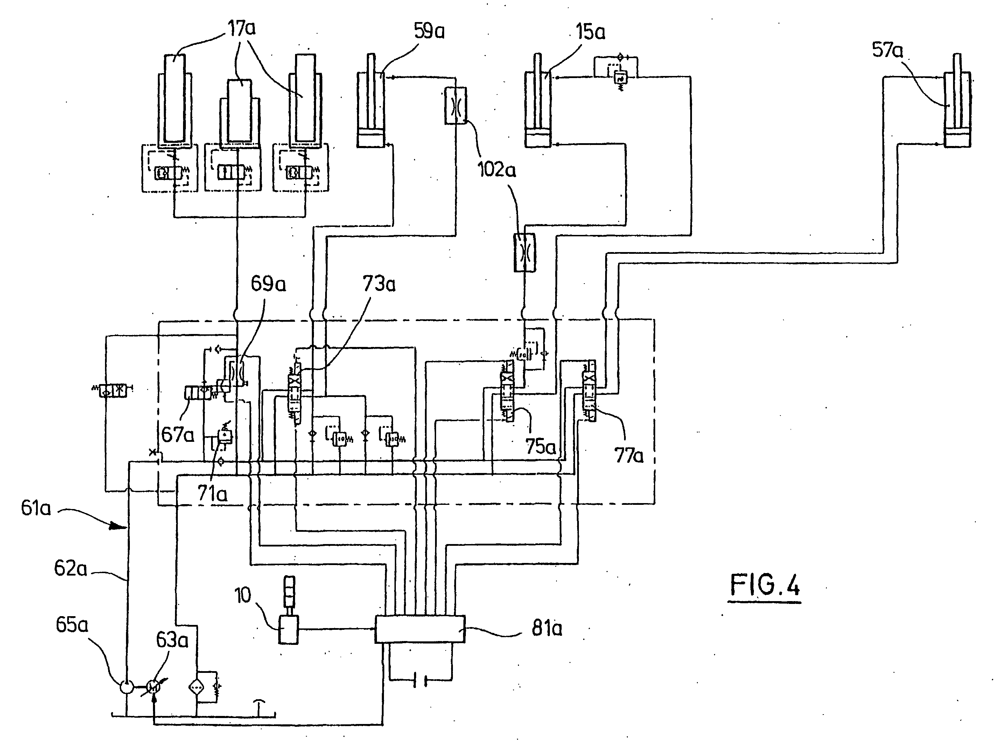

In Fig. 4 sind diejenigen Teile, die etwa mit denen nach Fig. 3 übereinstimmen, mit gleichen Bezugszeichen versehen, denen lediglich ein Index "a" hinzugefügt ist. Der Unterschied zwischen der Ausführungsform nach Fig. 3 besteht in Fig. 4 darin, daß in Fig. 4 über das Stellorgan 10 nicht Taster betätigt werden, wie die Taster 85, 97, 99 und 101, sondern daß vielmehr mit Hilfe des Stellorgans 10 und der Steuerung 81a analoge Signale für die einzelnen Ventile erzeugt werden zur proportionalen Betätigung der Stellglieder 17a, 59a, 15a und 57a in Abhängigkeit vom Bewegungsausmaß am Stellorgan 10 bzw. der zugehörigen Betätigungselemente.

Die Wirkungsweise der Anordnung nach Fig. 4 entspricht jedoch derjenigen nach Fig. 3, so daß darauf verzichtet wird, sie im einzelnen noch einmal zu erläutern.

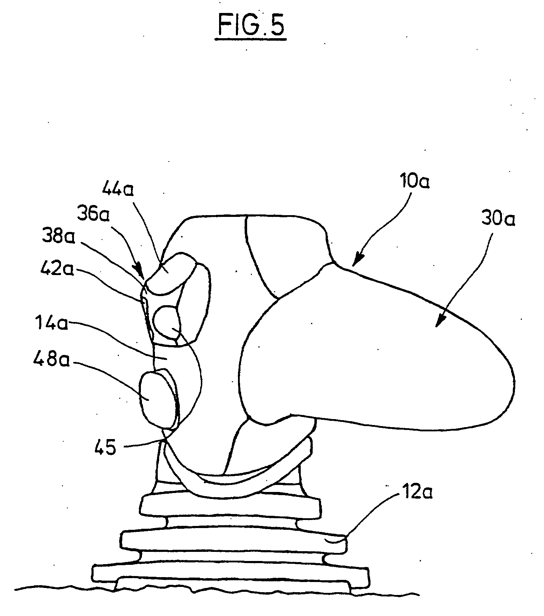

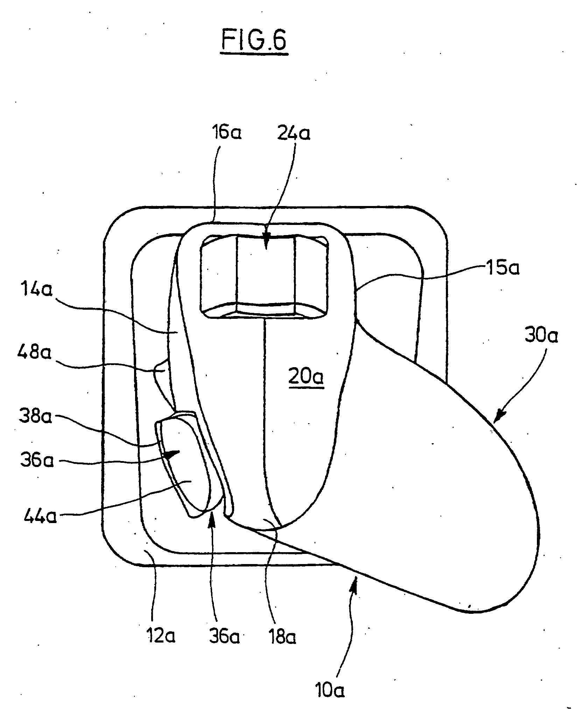

In den Figuren 5 und 6 ist eine modifizierte Handhabe 10a dargestellt. Die Abschnitte, die denen nach Fig. 2 gleichen, sind mit gleichen Bezugszeichen versehen, denen ein "a" hinzugesetzt wurde.

Man erkennt, daß der durch die Seitenflächen 14a, 15a, die Vorderfläche 16a, die Rückfläche 18a und die Oberseite 20a gebildete Grundkörper mit seiner Achse annähernd in der Längsachse des Faltenbalgs 12 verläuft, während der ballenförmige Griffabschnitt 30a in einem Winkel von annähernd 45° von der Bedienungsperson zur Seite forterstreckt ist. Wie aus der Zusammenschau von Fig. 5 und 6 zu erkennen, ist der Griffabschnitt 30a gegenüber der Oberseite 20a etwas nach unten versetzt angeformt, so daß der Übergang eine Anlagefläche für die Griffhand bildet. Die Oberseite 30a verschmälert sich nach hinten von der Schaltwippe 24 fort, und die Seitenflächen 14a, 15a gehen gerundet in die Frontfläche 16a über sowie nach hinten in die rückwärtige Fläche 18a, die im Querschnitt bogenförmig verläuft.

Die Oberseite 20a fällt nach vorn etwas ab. Im vorderen Abschnitt ist, ähnlich wie in Fig. 2, die Schaltwippe 24a untergebracht.

Der Kreuzschalter 36a ist relativ hinten in der Fläche 14a untergebracht, so daß er bequem vom Daumen der Hand betätigbar ist, welche von oben die Handhabe 10a erfaßt und mit dem Ballen der Hand auf dem Griffabschnitt 30a liegt, während letzterer von den letzten drei Fingern umfaßt wird. Während Ober- und Unterseite des Kreuzschalters 36a haben konkave Flächenabschnitte 44a, 42a, um den Schalter durch Daumenbetätigung um eine annähernd horizontale Achse verschwenken zu können. Die Ausführungsform nach den Figuren 5 und 6 west gegenüber der nach Fig. 2 vorne und hinten ebenfalls Griffflächenabschnitte auf, von denen in Fig. 5 nur der Griffflächenabschnitt 45 erkennbar ist, um mit dem Daumen auch ein Verschwenken des Schalters um eine annähernd vertikale Achse zu bewerkstelligen. Die Rippe 38a, die in Fig. 2 konkav geformt ist, ist in den Figuren 5 und 6 konvex geformt.

## Patentansprüche

1. Handbetätigte Stellvorrichtung für einen Bedienungsstand bzw. -sitz für mobile Flurförderzeuge, mit einer Handhabe, die ein in einer ersten Betätigungsebene bewegbares Stellorgan bildet und so geformt ist, daß sie von oben ergreifbar und an die Hand angepaßt ist, wobei das Stellorgan bei Betätigung mehrere analoge oder digitale Schaltkanäle steuert, ggf. über entsprechende Signalwandler, ferner mit einem in einer zweiten Betätigungsebene bewegbaren Schaltknopf (34) an einer der Bedienungsperson zugewandten seitlichen Fläche (14) der Handhabe (10), der so geformt ist, daß er vom Daumen betätigbar ist, während die Hand die Handhabe (10) hält oder auf dieser ruht zur Ansteuerung weiterer analoger oder digitaler Schaltkanäle, **dadurch gekennzeichnet, daß** die Handhabe (10) in Richtung des Unterarms der Bedienungsperson und annähernd senkrecht dazu bewegbar ist zur Betätigung von zwei Funktionen des Förderzeugs und der daumenbetätigte Schaltknopf (34) zum einen in der Richtung des Unterarms der Bedienungsperson hin und her und in einer Richtung annähernd senkrecht dazu bewegbar ist zur Betätigung von zwei weiteren Funktionen des Flurförderzeugs.

2. Vorrichtung nach Anspruch 1, **dadurch gekennzeichnet, daß** die Betätigungsebenen annähernd senkrecht aufeinanderstehen.

3. Vorrichtung nach Anspruch 1 und 2, **dadurch gekennzeichnet, daß** Stellorgan (10) und Schaltknopf (34) als Kreuzschalter wirken.

4. Vorrichtung nach einem der Ansprüche 1 bis 3, **dadurch gekennzeichnet, daß** die Handhabe (10) auf der Seite des Schaltknopfes (34) und auf der gegenüberliegenden Seite annähernd plane Seitenflächen (14) aufweist, die in einer Rundung in eine im Querschnitt bogenförmig gerundete Vorder- bzw. Hinterfläche (16, 18) übergehen und zwischen Oberseite (20) und Griffabschnitt (30) eine Furche (32) verläuft.

5. Vorrichtung nach einem der Ansprüche 1 bis 5, **dadurch gekennzeichnet, daß** der Grundwinkel der Handhabe (10) so gewählt ist, **daß** von der Hand eine entspannte Grundposition einnehmbar ist.

6. Vorrichtung nach Anspruch 4 oder 5, **dadurch gekennzeichnet, daß** Vorder- und Hinterfläche (16, 18) der Handhabe (10) in der Vertikalen im Winkel zueinander verlaufen, der nach oben divergiert.

7. Vorrichtung nach einem der Ansprüche 2 bis 6, **dadurch gekennzeichnet, daß** der Schaltknopf (34) einen gegenüber einem Basisabschnitt (36) erhabenen Rücken (38) aufweist, an den sich zu beiden Seiten konkav geformte dachförmige Flächen (40, 42) anschließen, wobei Rücken (36) und Dachflächen (40, 42) annähernd in Richtung des Daumens verlaufen, wenn die Hand die Handhabe (10) erfaßt.

8. Vorrichtung nach Anspruch 7, **dadurch gekennzeichnet, daß** der Rücken (38) des Schaltknopfes (34) annähernd mittig eine Einbuchtung aufweist.

9. Vorrichtung nach 7 oder 8, **dadurch gekennzeichnet, daß** der Rücken (38) des Schaltknopfes (34) an den Enden in einer Rundung in den Basisabschnitt (36) übergeht.

10. Vorrichtung nach einem der Ansprüche 1 bis 9, **dadurch gekennzeichnet, daß** an der Seitenfläche (14), an der der Schaltknopf (34) gelagert ist, ein Druckschalter (48) gelagert ist, der ebenfalls so angeordnet ist, **daß** er vom Daumen betätigbar ist.

11. Vorrichtung nach Anspruch 10, **dadurch gekennzeichnet, daß** der Druckschalter (48) unterhalb des Schaltknopfes (34) liegt.

12. Vorrichtung nach Anspruch 1 bis 11, **dadurch gekennzeichnet, daß** die Oberseite der Schaltwippe (24) schräg nach vorn geneigt ist.

13. Vorrichtung nach einem der Ansprüche 1 bis 12, **dadurch gekennzeichnet, daß** das Stellorgan (10) das Heben und Senken eines an einem Mast des Förderzeugs geführten Lasttragmittels (G) sowie ein Verschieben des Mastes (H) steuert und der Schaltknopf (34) die Fahrtrichtung des Förderzeugs und ein seitliches Verschieben des Mastes (H).

14. Vorrichtung nach Anspruch 1 bis 13, **dadurch gekennzeichnet, daß** die Schaltwippe (24) die Mastneigung des Förderzeugs steuert.

15. Vorrichtung nach Anspruch 14 **dadurch gekennzeichnet, daß** das Stellorgan (10) analog proportional steuert.

16. Vorrichtung nach einem der Ansprüche 13 bis 15, **dadurch gekennzeichnet, daß** der Schaltknopf (34) den Seitenschub tastend digital steuert.

17. Vorrichtung nach einem der Ansprüche 13 bis 16, **dadurch gekennzeichnet, daß** der Schaltknopf (34) die Fahrtrichtung rastend digital steuert.

18. Vorrichtung nach einem der Ansprüche 14 bis 17, **dadurch gekennzeichnet, daß** die Schaltwippe (24) die Mastneigung analog proportional steuert.

19. Vorrichtung nach einem der Ansprüche 1 bis 18, **dadurch gekennzeichnet, daß** das Stellorgan (10) einen Zweiachsenkreuzhebel betätigt.

20. Vorrichtung nach einem der Ansprüche 1 bis 19, **dadurch gekennzeichnet, daß** der Schaltknopf (34) eine H-Kulisse betätigt.

21. Vorrichtung nach einem der Ansprüche 1 bis 20, **dadurch gekennzeichnet, daß** die Oberfläche der Handhabe (10) allseitig gerundet und glatt ist.

22. Vorrichtung nach einem der Ansprüche 1 bis 21, **dadurch gekennzeichnet, daß** die Handhabe (E, 10) seitlich neben einem Sitzplatz (19) des Förderzeugs angeordnet ist.

23. Vorrichtung nach Anspruch 22, **dadurch gekennzeichnet, daß** die Handhabe (E, 10) im Handbereich einer Bedienperson angeordnet ist, die ihren Oberarm in Parallelstellung zum Oberkörper und ihren Unterarm horizontal abgewinkelt hält.

24. Vorrichtung nach Anspruch 23, **dadurch gekennzeichnet, daß** mindestens eine Unterarm-Stützfläche (F) vorgesehen ist, welche der Handhabe (E) räumlich derart zugeordnet ist, **daß** bei Abstützung eines Unterarms der Bedienperson an der Unterarm-Stützfläche (F) die Hand dieses Unterarms Zugriff zur Handhabe (E) hat.

25. Vorrichtung nach einem der Ansprüche 1 bis 24, **dadurch gekennzeichnet, daß** die Handhabe (10) in Steuerverbindung mit einem Ventil (67, 69, 75) steht zur Steuerung der Zufuhr und/oder des Abflusses von Hydraulikflüssigkeit zu bzw. von einem hydraulischen Kraftgerät als Antriebsmittel für das Lasttragmittel.

26. Vorrichtung nach Anspruch 25, **dadurch gekennzeichnet, daß** das Ventil (67, 69, 75) als elektrisch steuerbares Ventil, insbesondere Magnetventil, ausgebildet ist.

27. Vorrichtung nach Anspruch 26, **dadurch gekennzeichnet, daß** das Ventil (69) als stufenlos verstellbares Proportional-Magnetventil ausgeführt ist.

28. Vorrichtung nach einem der Ansprüche 25 bis 27, **dadurch gekennzeichnet, daß** die Handhabe (10) in Drehzahl-Steuerverbindung mit einem Motor (63) einer Hydraulik-Pumpe (65) für das Kraftgerät steht, wobei der Motor (63) vorzugsweise stufenlos in seiner Drehzahl veränderbar ist.

29. Vorrichtung nach Anspruch 28, **dadurch gekennzeichnet, daß** die Drehzahl-Steuerverbindung zwischen der Handhabe (E, 10) und der Hydraulik-Pumpe (65) derart ausgeführt ist, **daß** sich bei Bedienung der Handhabe mit zunehmender Auslenkung derselben aus einer Neutralstellung eine Drehzahlerhöhung einstellt.

30. Vorrichtung nach Anspruch 29, **dadurch gekennzeichnet, daß** die Drehzahlerhöhung schrittweise erfolgt.

31. Vorrichtung nach Anspruch 30, **dadurch gekennzeichnet, daß** die Drehzahlerhöhung, insbesondere bei Durchführung eines Hebevorgangs des Lastaufnahmemittels (13), kontinuierlich erfolgt.

## Claims

1. A manually actuated control device for an operator stand or seat for mobile industrial trucks, comprising a handler which defines a control element adapted to be moved in a first plane of actuation and is shaped so as to be capable of being gripped from above and being adapted to the hand wherein the control element, upon actuation, controls several analogue or digital switching ports, possibly via appropriate signal transducers, further comprising a control button (34) adapted to be moved in a second plane of actuation on a side surface (14) of the handler (10) facing the operator, which button is shaped so as to be operable by the thumb while the hand is holding the handler (10) or rests thereon for an activation of further analogue or digital switching ports, **characterized in that** the handler (10) is adapted to be moved in the direction of the operator's lower arm and approximately perpendicular thereto for an actuation of two functions of the industrial truck and the thumb-actuated control button (34) is adapted to be moved to and fro in the direction of the operator's lower arm, on one hand, and in a direction vertical thereto, on the other, to operate two more functions of the industrial truck.

2. The device according to claim 1, **characterized in that** the planes of actuation are approximately perpendicular to each other.

3. The device according to claim 1 or 2, **characterized in that** the control element (10) and the control button (34) act as a two-way intermediate switch.

4. The device according to any one of claims 1 to 3, **characterized in that** the handler (10), on the side of the control button (34) and the opposite side, has side surfaces (14) which are approximately planar and, in a rounded region, pass over into front and rear surfaces (16, 18) arcuately rounded in cross-section, and that a flute (32) extends between the upper side (20) and the gripping portion (30).

5. The device according to any one of claims 1 to 4, **characterized in that** the basic angle of the handler (10) is chosen so that the hand may take a relaxed basic position.

6. The device according to claim 4 or 5, **characterized in that** the front and rear surfaces (16, 18) of the handler (10), in a vertical line, extend at an angle to each other which diverges upwardly.

7. The device according to any one of claims 2 to 6, **characterized in that** the control button (34) has a back (38) which is convex with respect to a base portion (36) and is joined by concavely formed, roof-shaped surfaces (40, 42) on either side, wherein the back (36) and the roof-shaped surfaces (40, 42) extend approximately in the thumb direction if the hand grips the handler (10).

8. The device according to claim 7, **characterized in that** the back (38) of the control button (34) has a bay which is approximately central.

9. The device according to claim 7 or 8, **characterized in that** the back (38) of the control button (34), at the ends, passes over into the base portion (36) in a rounded region.

10. The device according to any one of claims 1 to 9, **characterized in that** the side surface (14) on which the control button (34) is supported has supported thereon a push-button switch (48) which also is disposed so as to be operable by the thumb.

11. The device according to claim 1, **characterized in that** the push-button switch (48) is disposed below the control button (34).

12. The device according to claims 1 to 11, **characterized in that** the upper side of the operating rocker (24) is obliquely inclined to the front.

13. The device according to any one of claims 1 to 12, **characterized in that** the control element (10) controls the lifting and lowering of a load-carrying means (G) guided on a mast of the material handling equipment and controls a displacement of the mast (H) and the control button (34) controls the direction of travel of the industrial truck and a sideward displacement of the mast (H).

14. The device according to claims 1 or 13, **characterized in that** the operating rocker (24) controls the mast inclination of the industrial truck.

15. The device according to claim 14, **characterized in that** the control element (10) effects an analogue, proportional control.

16. The device according to any one of claims 13 to 15, **characterized in that** the control button (34) effects a tentative, digital control of the sideward push.

17. The device according to any one of claims 13 to 16, **characterized in that** the control button (34) effects a locking, digital control of the direction of travel.

18. The device according to any one of claims 14 to 17, **characterized in that** the operating rocker (24) effects an analogue, proportional control of the mast inclination.

19. The device according to any one of claims 1 to 18, **characterized in that** the control element (10) actuates a two-axis star lever.

20. The device according to any one of claims 1 to 19, **characterized in that** the control button (34) actuates a H-shaped connecting link.

21. The device according to any one of claims 1 to 20, **characterized in that** the surface of the handler (10) is rounded all over and is smooth.

22. The device according to any one of claims 1 to 21, **characterized in that** the handler (E, 10) is laterally disposed next to a driver's seat (19) of the industrial truck.

23. The device according to claim 22, **characterized in that** the handler (E, 10) is disposed within the reach of a hand of an operator who holds his upper arm in a position parallel to the upper part of the body and holds his lower arm at an angle from the horizontal.

24. The device according to claim 23, **characterized in that** at least one lower arm supporting surface (F) is provided which is spatially associated with the handler (E) in such a way that if the operator supports a lower arm on the lower arm supporting surface (F) the hand of said lower arm has an access to the handler (E).

25. The device according to any one of claims 1 to 24, **characterized in that** the handler (10) is in a control communication with a valve (67, 69, 75) for a control of the inflow of hydraulic fluid to and/or the outflow of hydraulic fluid from a hydraulic-power operated unit as a driving means for the load-carrying means.

26. The device according to claim 25, **characterized in that** the valve (67, 69, 75) is designed as an electrically controllable valve, in particular a solenoid valve.

27. The device according to claim 26, **characterized in that** the valve (69) is designed as an infinitely variable proportional solenoid valve.

28. The device according to any one of claims 25 to 27, **characterized in that** the handler (10) is in a speed control communication with a motor (63) of a hydraulic pump (65) for the power-operated unit with the motor preferably being infinitely variable in its speed.

29. The device according to claim 28, **characterized in that** the speed control communication between the handler (E, 10) and the hydraulic pump (65) is designed in such a way that if the handler is actuated an increase in speed will occur with an increasing motion thereof out of a neutral position.

30. The device according to claim 29, **characterized in that** the increase in speed is performed by steps.

31. The device according to claim 30, **characterized in that** the increase in speed is continuous, particularly if a lifting motion of the load-receiving means (13) is carried out.

## Revendications

1. Dispositif manuel de commande pour un poste de commande debout ou assis, destiné à des chariots de manutention mobiles au sol, comportant une poignée, qui constitue un organe de commande, mobile dans un premier plan d'actionnement, et qui présente une forme telle qu'elle puisse être saisie depuis le haut et qu'elle s'ajuste à la main, l'organe de commande commandant, lors de son actionnement, plusieurs canaux de commutation analogiques ou numériques, le cas échéant par l'intermédiaire de convertisseurs de signaux correspondants, comportant, de plus, sur une surface latérale (14) de la poignée (10), tournée vers le conducteur, un bouton de commutation (34), mobile dans un deuxième plan d'actionnement et ayant une forme telle qu'il puisse être actionné par le pouce, pendant que la main tient la poignée (10), ou repose sur celle-ci, pour commander d'autres canaux de commutation analogiques ou numériques,
**caractérisé en ce que** la poignée (10) peut se déplacer dans la direction de l'avant-bras du conducteur et sensiblement perpendiculairement à cette direction, pour actionner deux fonctions du chariot de manutention, et **en ce que** le bouton de commutation (34), actionné par le pouce, peut se déplacer, d'une part, en avant et en arrière dans la direction de l'avant-bras, et également dans une direction sensiblement perpendiculaire à elle, pour actionner deux autres fonctions du chariot de manutention au sol.

2. Dispositif suivant la revendication 1, **caractérisé en ce que** les plans d'actionnement sont sensiblement perpendiculaires l'un à l'autre.

3. Dispositif suivant les revendications 1 et 2, **caractérisé en ce que** l'organe de commande (10) et le bouton de commutation (34) fonctionnent sous la forme de commutateurs en croix.

4. Dispositif suivant l'une des revendications 1 à 3, **caractérisé en ce que** la poignée (10) présente, sur le côté du bouton de commutation (34) et sur le côté opposé, des surfaces latérales sensiblement planes (14), qui, dans un arrondi, se raccordent à une surface avant et une surface arrière (16, 18), arrondies suivant une section courbe, et **en ce qu'**un sillon (32) est tracé entre la surface supérieure (20) et la zone de prise (30).

5. Dispositif suivant l'une des revendications 1 à 4, **caractérisé en ce que** l'angle de base da la poignée (10) est choisi tel qu'une position de base détendue puisse être prise par la main.

6. Dispositif suivant la revendication 4 ou 5, **caractérisé en ce que** les surfaces avant et arrière (16, 18) de la poignée (10) forment entre elles, verticalement, l'une par rapport à l'autre, un angle qui diverge vers le haut.

7. Dispositif suivant l'une des revendications 2 à 6, **caractérisé en ce que** le bouton de commutation (34) présente un dos (38) convexe par rapport à une partie de base (36), dos sur lequel se raccordent, des deux côtés, des surfaces (40, 42) concaves formant toit, le dos (36) et les surfaces en toit (40, 42) ayant un tracé suivant sensiblement la direction du pouce quand la main saisit la poignée (10).

8. Dispositif suivant la revendication 7, **caractérisé en ce que** le dos (38) du bouton de commutation (34) présente une concavité sensiblement en son milieu.

9. Dispositif suivant la revendication 7 ou la revendication 8, **caractérisé en ce que** le dos (38) du bouton de commutation (34) se continue, à ses extrémités, en un arrondi dans la partie de base (36).

10. Dispositif suivant l'une des revendications 1 à 9, **caractérisé en ce que**, sur la face latérale (14) sur laquelle est placé le bouton de commutation (34), est disposé un bouton poussoir (48), qui, de même, est placé de telle façon qu'il puisse être actionné par le pouce.

11. Dispositif suivant la revendication 10, **caractérisé en ce que** le bouton poussoir (48) est disposé en dessous du bouton de commutation (34).

12. Dispositif suivant les revendications 1 à 11, **caractérisé en ce que** la surface supérieure du bouton de commutation à bascule (24), présente une pente inclinée vers l'avant.

13. Dispositif suivant l'une des revendications 1 à 12, **caractérisé en ce que** l'organe de commande (10) commande le levage et l'abaissement d'un moyen destiné à porter la charge (G) et guidé sur un mât du chariot de manutention, ainsi qu'un coulissement du mât (H), et **en ce que** le bouton de commutation (34) commande le sens de déplacement du chariot de manutention et un coulissement latéral du mât (H).

14. Dispositif suivant les revendications 1 à 13, **caractérisé en ce que** le bouton de commutation à bascule (24) commande l'inclinaison du mât du chariot de manutention.

15. Dispositif suivant la revendication 14, **caractérisé en ce que** l'organe de commande (10) commande de façon analogique proportionnelle.

16. Dispositif suivant l'une des revendications 13 à 15, **caractérisé en ce que** le bouton de commutation (34) commande le coulissement latéral de façon numérique et pas-à-pas.

17. Dispositif suivant l'une des revendications 13 à 16, **caractérisé en ce que** le bouton de commutation (34) commande le sens de déplacement de façon numérique avec un crantage.

18. Dispositif suivant l'une des revendications 14 à 17, **caractérisé en ce que** le bouton de commutation à bascule (24) commande l'inclinaison du mât de façon analogique proportionnelle.

19. Dispositif suivant l'une des revendications 1 à 18, **caractérisé en ce que** l'organe de commande (10) actionne un levier en croix à deux axes.

20. Dispositif suivant l'une des revendications 1 à 19, **caractérisé en ce que** le bouton de commutation (34) actionne une coulisse en H.

21. Dispositif suivant l'une des revendications 1 à 20, **caractérisé en ce que** la surface de la poignée (10) est arrondie de tous les côtés et est lisse.

22. Dispositif suivant l'une des revendications 1 à 21, **caractérisé en ce que** la poignée (E, 10) est disposée latéralement, à côté d'un siège (19) du chariot de manutention.

23. Dispositif suivant la revendication 22, **caractérisé en ce que** la poignée (E, 10) est disposée dans la zone de la main d'un conducteur qui tient son bras dans une position parallèle à son buste, et son avant-bras horizontal.

24. Dispositif suivant la revendication 23, **caractérisé en ce qu'**il est prévu au moins une surface d'appui pour l'avant bras (F), cette surface étant associée, dans l'espace, à la poignée (E) de telle façon que, lorsqu'un avant-bras du conducteur est appuyé sur la surface d'appui de l'avant-bras (F), la main de cet avant-bras peut saisir la poignée (E).

25. Dispositif suivant l'une des revendications 1 à 24, **caractérisé en ce que** la poignée (10) est reliée, pour la commande, à une vanne (67, 69, 75) pour commander l'alimentation et/ou le refoulement du fluide hydraulique vers ou depuis un appareil d'énergie hydraulique se présentant sous la forme d'un moyen d'entraînement du moyen portant la charge.

26. Dispositif suivant la revendication 25, **caractérisé en ce que** la vanne (67, 69, 75) est réalisée sous la forme d'une vanne commandée électriquement, en particulier d'une électrovanne.

27. Dispositif suivant la revendication 26, **caractérisé en ce que** la vanne (69) est réalisée sous la forme d'une électrovanne proportionnelle réglable en continu.

28. Dispositif suivant l'une des revendications 25 à 27, **caractérisé en ce que** la poignée (10) est reliée, pour la commande de vitesse de rotation, à un moteur (63) d'une pompe hydraulique (65) pour l'appareil d'énergie, avec possibilité de modifier la vitesse de rotation du moteur (63) de préférence de façon continue.

29. Dispositif suivant la revendication 28, **caractérisé en ce que** la liaison de commande de vitesse de rotation est réalisée, entre la poignée (E, 10) et la pompe hydraulique (65), de telle façon que, lorsqu'on agit sur la poignée en la déplaçant progressivement à partir d'une position neutre, on commande une augmentation de la vitesse de rotation.

30. Dispositif suivant la revendication 29, **caractérisé en ce que** l'augmentation de la vitesse de rotation se fait pas-à-pas.

31. Dispositif suivant la revendication 30, **caractérisé en ce que** l'augmentation de la vitesse de rotation, en particulier lors d'une opération de levage du moyen portant la charge (13), se fait en continu.
